# EUROPÄISCHE PATENTSCHRIFT

(11) **EP 2 617 341 B1**
(45) Veröffentlichungstag und Bekanntmachung des Hinweises auf die Patenterteilung: **30.06.2021**
(21) Anmeldenummer: 13150375.7
(22) Anmeldetag: 07.01.2013
(51) Int. Cl.: A47L 9/28, G05D 1/02

(54) **Selbsttätig verfahrbares Gerät sowie Verfahren zum Betreiben eines solchen Gerätes**
Self-propelled device and method for orienting such a device
Appareil automobile et procédé de fonctionnement d'un tel appareil

(30) Priorität: 19.01.2012 DE 102012100406
(43) Veröffentlichungstag der Anmeldung: 24.07.2013
(73) Patentinhaber: Vorwerk & Co. Interholding GmbH, 42275 Wuppertal (DE)
(72) Erfinder: Liß, Raphael, 53225 Bonn (DE); Schlischka, Patrick, 42349 Wuppertal (DE)
(74) Vertreter: Müller, Enno

(56) Entgegenhaltungen:
- EP-A1- 2 065 774
- EP-A2- 1 712 970
- JP-A- 2007 034 561
- US-A1- 2005 120 505
- US-A1- 2006 238 374
- None

## Beschreibung

Die Erfindung betrifft zunächst ein Verfahren zum Betreiben eines selbsttätig verfahrbaren Geräts nach den Merkmalen des Oberbegriffes des Anspruches 1.

Weiter betrifft die Erfindung ein selbsttätig verfahrbares Gerät, insbesondere Reinigungsgerät zur Reinigung eines Bodens wie ein Saug- und/oder Kehrroboter, nach den Merkmalen des Oberbegriffes des Anspruches 11.

Verfahren der in Rede stehenden Art sind bekannt, so insbesondere zum Betreiben von selbsttätig verfahrbaren Geräten, so insbesondere in Form von Reinigungs- oder auch Transportgeräten, weiter insbesondere im Haushaltsbereich. Diese Geräte arbeiten im (Reinigungs-) Betrieb bevorzugt ohne Benutzereingriff. Beispielsweise zufolge einer Befehlsübermittlung verfährt das Gerät selbsttätig bspw. in einen vorgegebenen Raum, um hiernach bevorzugt selbsttätig entsprechend einer vorgegebenen und einprogrammierten Verfahrstrategie bspw. den Boden abzureinigen. Das Gerät verfährt hierbei weiter bevorzugt unter Zuhilfenahme einer in dem Gerät hinterlegten Kartografie des Gebietes, bspw. einer Wohnung, welche Kartografie selbsttätig bspw. vor einer Erstbenutzung des Gerätes erstellt wird oder alternativ im Zuge einer benutzergeführten Lernfahrt. In der abgelegten Karte sind bevorzugt neben den üblichen Raumbegrenzungen auch Gegenstände, wie insbesondere Schränke oder weitere Möbelstücke verzeichnet. Alternativ oder ergänzend kann das Gerät auch zur selbsttätigen Erstellung einer Kartografie ausgebildet sein. Zur insbesondere selbsttätigen Erstellung der Kartografie, darüber hinaus auch zur Hinderniserkennung im Zuge des üblichen Verfahrens, insbesondere Reinigungsverfahrens des Gerätes, weist dieses zumindest eine Sensorik auf, mittels welcher Hindernisse, weiter Gegenstände im Umfeld des Gerätes, registriert werden können.

Diesbezüglich ist es weiter bekannt, Ultraschall- oder auch Infrarot-Abstandsmessungen durchzuführen, wobei durch die im Zuge des üblichen Verfahrens oder auch bei Stillstand des Gerätes ermittelten Abstandswerte unter Zuhilfenahme der bevorzugt abgelegten Kartografie auch eine eindeutige Positionsbestimmung des Gerätes innerhalb der Karte bzw. innerhalb der Wohnung ermöglicht. Die Sensorik ist hierzu zumindest auf das Gebiet in üblicher Verfahrrichtung des Gerätes vor diesem gerichtet. Darüber hinaus sind Lösungen bekannt, bei welchen eine Rundum-Abstandsmessung erfolgt, dies insbesondere zufolge einer um eine Vertikalachse rotierenden Sensorik, weiter bevorzugt unter Nutzung eines rotierenden Triangulationssystems. Weiter sind derartige Geräte bekannt, welche über eine Empfangseinrichtung der eingangs aufgeführten Art verfügen, um so insbesondere drahtlose Signale entsprechender Sendeeinrichtungen, wie bspw. Mobilfunk-Telefone oder Notepads, zu empfangen, welche Signale durch den Benutzer bspw. zufolge Tastendruck zur Auslösung einer Gerätefunktion ausgesendet werden.

Aus der EP 1 712 970 A2 ist es bekannt, dass ein Reinigungsroboter Steuerungssignale über verschiedene drahtlose Kommunikationsmöglichkeiten erhalten kann. Im Falle eines Telefonanrufes wird zunächst von dem Anrufer verlangt, eine bestimmte Kennung, wie etwa eine persönliche Geheimnummer, zu übersenden. Erst wenn ein Nutzer derart bestätigt ist, kann er durch Drücken eines Knopfes auf dem Telefon ein Steuerungssignal an den Reinigungsroboter übermitteln.

Aus der EP 2 065 774 A1 ist es bekannt, dass ein verfahrbares Gerät mit Signalgebern kommuniziert, die einen Weg zu einer Basisstation (Homing Beam) weisen können. Diese Signalgeber werden aber nur daraufhin überprüft, ob sie für die in dem verfahrbaren Gerät gespeicherte Position ihre korrekte Kennung aufweisen. Andernfalls wird angenommen, dass sie vertauscht sind oder jedenfalls nicht mehr in der vorausgesetzten Position.

Aus der JP 2007 034561 A ist es bei einem automatisch verfahrbaren Reinigungsgerät bekannt, mittels eines Sensors, der einen menschlichen Körper erfassen kann, festzustellen, ob ein menschlicher Körper innerhalb des zu reinigenden Gebietes anwesend ist oder nicht.

Darüber hinaus ist noch die US 2006/0238374 A1 zu verweisen. Hieraus ist es bekannt, dass ein Steuerungsgerät für ein selbsttätig verfahrbares Reinigungsgerät eine Mehrzahl von Tasten aufweist, die gedrückt werden können und ein der gedrückten Taste entsprechendes Infrarotsignal abgeben. Wenn das entsprechende Infrarotsignal bei dem verfahrbaren Gerät erkannt wird, wird die der gedrückten Taste entsprechende Handlung durch das verfahrbare Gerät ausgeführt.

Ausgehend von dem dargelegten Stand der Technik beschäftigt sich die Erfindung verfahrensmäßig mit der Aufgabenstellung, ein günstiges Verhalten des Gerätes im Hinblick auf empfangende individualisierende Kennung zu erreichen. Gegenständlich beschäftigt sich die Erfindung mit der Aufgabenstellung, ein selbsttätig verfahrbares Gerät anzugeben, das im Hinblick auf den Empfang einer individualisierenden Kennung eines bestimmten Sendegerätes vorteilhaft reagieren kann.

Diese Aufgabe ist hinsichtlich des Verfahrens beim Gegenstand des Anspruches 1 gelöst, wobei darauf abgestellt ist, dass in dem Speicher bestimmte Sendegeräte individualisierende Kennungen gespeichert sind, wobei von der Empfangseinrichtung empfangene Signale mit den gespeicherten Kennungen verglichen werden, wobei in Abhängigkeit einer Erkennung einer, ein bestimmtes Sendegerät individualisierenden Kennung als gespeicherte oder nicht gespeicherte Kennung unterschiedliche Handlungen des Gerätes ausgelöst werden, wobei eine Handlung ohne gezielte Befehlsauslösung durch einen Benutzer ausgelöst wird, wobei allein das Vorhandensein des Sendegerätes in dem Empfangsbereich des Gerätes ausreicht.

Gegenständlich ist die Aufgabe, beim Gegenstand des Anspruches 11 gelöst, wobei darauf abgestellt ist, dass in dem Speicher bestimmte Sendegeräte individualisierende Kennungen gespeichert sind, wobei von der Empfangseinrichtung empfangene Signale mit den gespeicherten Kennungen vergleichbar sind, wobei in Abhängigkeit einer Erkennung einer, ein bestimmtes Sendegerät individualisierenden Kennung als gespeicherte oder nicht gespeicherte Kennung unterschiedliche Handlungen des Gerätes auslösbar sind, wobei eine Handlung ohne gezielte Befehlsauslösung durch einen Benutzer ausgelöst wird, wobei allein das Vorhandensein eines Sendegerätes in dem Empfangsbereich des Gerätes ausreicht.

Bevorzugt sind in dem Gerät, weiter insbesondere in dem hierin bevorzugt vorgesehenen nicht flüchtigen Speicher bestimmte Sendegeräte individualisierende Kennungen gespeichert, so insbesondere zur Identifikation von Kennungen im kabellosen Übertragungsverfahren, beispielsweise in Form von Mobilfunknummern, IP-Nummern oder anderen Kennungen. Zum Empfang und Identifizierung von insbesondere Mobilfunkgeräten sind in dem nicht flüchtigen Speicher bevorzugt diesbezügliche Mobilfunk-Rufnummern oder dergleichen hinterlegt. Das vorgeschlagene Verfahren nutzt hierbei eine vorhandene Einzelfunktion des selbsttätig verfahrbaren Gerätes, nämlich den Empfang solcher drahtlosen Signale. Derartige Signale werden nach dem Empfang durch das Gerät bevorzugt unter Nutzung einer entsprechenden Auswertesoftware mit den gespeicherten Kennungen im nicht flüchtigen Speicher verglichen. Infolge eines solchen Abgleiches ist das selbsttätig verfahrbare Gerät in der Lage, zwischen ihm bekannten und nicht bekannten bevorzugt mobilen Geräten, wie Handys, Notepads oder dergleichen zu unterscheiden und in Abhängigkeit von der vom Sendegerät individualisierten Kennung unterschiedliche Handlungen des Gerätes auszulösen, ohne dass der Benutzer willensbetont mittels des Sendegerätes einen Befehl per Signal übermittelt. So werden insbesondere bei Erfassung einer gespeicherten Kennung andere Handlungen des Gerätes ausgelöst als bei Erkennung einer nicht gespeicherten und somit unbekannten Kennung, wobei weiter bevorzugt die Erfassung einer gespeicherten und somit bekannten Kennung eine andere Handlung des Gerätes auslösen kann als bei Erfassung einer weiteren gespeicherten und somit bekannten Kennung. Zufolge des vorgeschlagenen Verfahrens ist insbesondere durch den Benutzer des Gerätes oder einer anderen Person keine gezielte Befehlsauslösung über das Sendegerät zur Auslösung einer Handlung des Gerätes erforderlich. Vielmehr ist allein das Vorhandensein des Sendegerätes im Empfangsbereich des selbsttätig verfahrbaren Gerätes ausreichend. Entsprechend ermöglicht das vorgeschlagene Verfahren ein Reagieren des selbsttätig verfahrbaren Gerätes bevorzugt allein, weiter jedoch auch in Kombination mit bekannten Befehlseingaben, bspw. kabellose Befehlseingaben über Funk oder dergleichen, infolge Vorhandensein eines Sendegerätes und damit einhergehendem Empfang dessen Kennung.

In einer bevorzugten Ausgestaltung ist vorgesehen, dass bei Erkennung einer nicht gespeicherten Kennung eine Alarmfunktion ausgelöst wird. Diese Alarmfunktion ist in einer bevorzugten Ausgestaltung zeitlich begrenzt aktiviert, so insbesondere zufolge entsprechender Befehlseingabe durch eine berechtigte Person. Wird entsprechend ein drahtloses Signal eines Sendegerätes erfasst, dessen individuelle Kennung nicht in dem nicht flüchtigen Speicher des Gerätes hinterlegt ist, wird dies von dem selbsttätig verfahrbaren Gerät, sofern diese Funktion entsprechend freigeschaltet ist, als Vorhandensein einer nicht im Umfeld des selbsttätig verfahrbaren Gerätes sich berechtigt aufhaltenden Person gewertet. Daraufhin wird bevorzugt selbsttätig eine Alarmfunktion ausgelöst, beispielsweise indem das selbsttätig verfahrbare Gerät ein akustisches und/oder optisches Warnsignal abgibt. In weiterer bevorzugter Ausgestaltung wird durch die aktivierte Alarmfunktion durch das selbsttätig verfahrbare Gerät eine Überwachungskamera oder dergleichen, gegebenenfalls auch mehrere solcher Kameras aktiviert, deren Bilder beziehungsweise Videostreams in einem bevorzugt mit Bezug zu dem selbsttätig verfahrbaren Gerät externen nicht flüchtigen Speicher abgelegt werden und/oder per SMS auf ein Mobilfunkgerät und/oder per Email weitergeleitet werden. Darüber hinaus ist auch eine Übertragung der Bilder im Internet auf einem Portal mit eigener Kennung per Livestream möglich. Die Übertragung der durch den Alarm zu übermittelnden Informationen erfolgt weiter bevorzugt mittels derselben Übertragungsverfahren wie eingangs beschrieben, wie etwa Bluetooth, W-Lan, ZigBee, UMTS, DECT oder GSM. Darüber hinaus verfügt in einer weiteren Ausgestaltung das Gerät über ein Display, auf welchem bei Auslösung einer Alarmfunktion die Erkennung einer nicht gespeicherten Kennung eines Sendegerätes angezeigt wird, dies beispielsweise durch Anzeige eines entsprechenden Symbols und/ oder Blinken eines Symbols und/oder durch Anzeigen der erfassten Kennung, beispielsweise Anzeigen der übertragenen und erfassten Mobilfunknummer oder dergleichen.

In weiter bevorzugter Ausgestaltung wird bei Erkennung einer gespeicherten Kennung eine Verfahrroutine ausgelöst. Entsprechend erfasst das selbsttätig verfahrbare Gerät bei Erkennung einer gespeicherten Kennung diese als Kennung eines sich im Umfeld des Gerätes berechtigt aufhaltenden Person und/oder eines berechtigt hinterlegten Sendegerätes. Bei Erfassen einer gespeicherten Kennung wird unter Nutzung einer entsprechenden Auswertesoftware eine in dem selbsttätig verfahrbaren Gerät hinterlegte Verfahrroutine abgerufen. Hierbei kann eine bestimmte Verfahrroutine ausgelöst werden, unabhängig davon, welche gespeicherte Kennung erfasst ist. Alternativ sind den in dem nicht flüchtigen Speicher gespeicherten Kennungen gegebenenfalls unterschiedliche Verfahrroutinen zugeordnet, so dass bei Erfassung einer gespeicherten Kennung eine andere Verfahrroutine gegebenenfalls ausgelöst wird als bei Erkennung einer anderen gespeicherten Kennung.

Die ausgelöste Verfahrroutine bei Erkennung einer gespeicherten Kennung ist bevorzugt das Verlassen des Raumes, in welchem die gespeicherte Kennung erfasst wurde. Zufolge der bevorzugt hinterlegten Kartographie der Umgebung, insbesondere der Wohnung, ist das selbsttätig verfahrbare Gerät in der Lage, verschiedene Räume zu unterscheiden. Bei Erkennung einer gespeicherten Kennung ist entsprechend das verfahrbare Gerät in der Lage, die Anwesenheit einer berechtigten Person zu erkennen. Das selbsttätig verfahrbare Gerät reagiert bei Erkennung einer gespeicherten Kennung bevorzugt in der Form, dass dieses den Raum, in welcher das die gespeicherte Kennung aussendende Sendegerät sich befindet, nicht anfährt beziehungsweise diesen Raum verlässt. Es ist entsprechend eine Anpassung des Verhaltens des selbsttätig verfahrbaren Gerätes insbesondere in Abhängigkeit von der Anwesenheit von Personen, welche ein Sendegerät mit einer sich bevorzugt wiederholenden Aussendung einer individuellen, in dem flüchtigen Speicher des Gerätes hinterlegten Kennung mit sich trägt, gegeben. Das selbsttätig verfahrbare Gerät muss entsprechend nicht auf eine Zeit programmiert werden, in welcher dieses beispielsweise eine Reinigungs-Verfahrroutine zur Abreinigung des Fußbodens abruft. Vielmehr erkennt das Gerät zufolge des vorgeschlagenen Verfahrens, wann sich eine berechtigte Person im Haushalt befindet bzw. wann keine, ein gespeichertes Sendegerät bei sich führende Person vor Ort ist. In letzterem Fall startet das Gerät bevorzugt selbsttätig bspw. eine Reinigungsroutine.

Darüber hinaus kann ein solches Sendegerät, wie beispielsweise ein Mobilfunk-telefon oder dergleichen, auch als virtuelle Wand, beispielsweise zur Sperrung von Räumen, genutzt werden, sofern dessen individuelle Kennung in dem nicht flüchtigen Speicher hinterlegt ist. Das Hinterlegen eines solchen Sendegerätes in einem Raum führt in einer Ausgestaltung zum Ausschluss dieses Raumes aus der üblichen Reinigungsroutine des selbsttätig verfahrbaren Gerätes. In alternativer Ausgestaltung wird hierdurch in Abhängigkeit von einer entsprechenden Programmierung des Gerätes mit Bezug auf die hinterlegte Kennung gezielt der Raum gereinigt, in welchem das Sendegerät sich befindet.

Weiter bevorzugt wird bei Erkennung einer gespeicherten Kennung ein Verfahren des Gerätes zu einer Ruheposition ausgelöst, so weiter insbesondere in dem Fall, dass mit der gespeicherten, erkannten Kennung eine solche Verfahrroutine hinterlegt ist. So verfährt das selbsttätig verfahrbare Gerät bei Erfassung einer gespeicherten Kennung bevorzugt zurück zu einer dem Gerät zugeordneten Basisstation, in oder auf welcher das selbsttätig verfahrbare Gerät in einer Parkposition verbleibt. In einer solchen Basisstation erfolgt bevorzugt ein Aufladen der geräteseitigen Akkumulatoren und/oder eine Entleerung eines gegebenenfalls vorgesehenen Schmutzsammelbehälters bei Ausgestaltung des Gerätes als Bodenreinigungsgerät. Weiter bevorzugt wird eine Verfahr- bzw. Reinigungsstrategie des Gerätes ausgelöst, sobald die, das Verfahren des Gerätes zu der Ruheposition auslösende Kennung nicht weiter vom Gerät erfasst wird. Bevorzugt beginnt hiernach ein als Bodenreinigungsgerät ausgebildetes Gerät seine Reinigungsfahrt, schließt gegebenenfalls an die zuvor unterbrochene Reinigungsfahrt am Ort der Unterbrechung wieder an.

Die gefundenen Kennungen, bevorzugt die gefundenen gespeicherten Kennungen, darüber hinaus weiter bevorzugt auch die gefundenen nicht gespeicherten Kennungen, werden in bevorzugter Ausgestaltung angezeigt, wozu weiter das Gerät bevorzugt ein entsprechendes Display oder dergleichen aufweist. Bevorzugt wird diesbezüglich weiter die mögliche Anzeige mehrerer gefundener Kennungen, welche über einen vorbestimmten Zeitraum erfasst wurden, so dass auch durch den Benutzer im Nachhinein eine Sichtung der beispielsweise im Laufe des Tages erfassten Kennungen vorgenommen werden kann. Zur Anzeige mehrerer erfasster Kennungen kann das Display eine Scroll-Anzeige aufweisen. Auch ist bevorzugt eine Liste von erfassten Kennungen fernabrufbar, so bspw. mittels eines Mobilfunk-Telefons.

Bevorzugt ist weiterhin, dass durch Bestätigen einer angezeigten Kennung eine Speicherung der Kennung in dem nicht flüchtigen Speicher durchführbar ist. So sind insbesondere Sendegeräte-Kennungen, die einer berechtigten Person zuordbar sind, in dem flüchtigen Speicher ablegbar, darüber hinaus gegebenenfalls im Zusammenhang mit einer bestimmten Verhaltenstrategie des selbsttätig verfahrbaren Gerätes. Darüber hinaus sind derartig gespeicherte Kennungen bevorzugt auch aus dem nicht flüchtigen Speicher löschbar, wobei bevorzugt jeder Eingriff auf den nicht flüchtigen Speicher (Speicherung oder Löschung von Kennungen) bevorzugt nur durch berechtigte Personen durchführbar ist, wozu beispielsweise die Eingabe eines entsprechenden Passwortes oder dergleichen nötig ist. Eine solche Berechtigung kann darüber hinaus auch allein zufolge Identifikation mittels eines vom Benutzer getragenen Sendegerätes mit gespeicherter Kennung vorliegen, wobei weiter bspw. diesbezüglich ein Sendegerät eine Masterkennung besitzt.

In weiterer Ausgestaltung erfolgt eine Auslösung einer Handlung des Gerätes bevorzugt in Abhängigkeit von einer bestimmten Stärke des Signals. In Abhängigkeit von der Stärke ist bevorzugt auf die Entfernung des selbsttätig verfahrbaren Gerätes zu dem die Kennung sendenden Sendegerätes zu ermitteln. Entsprechend lässt sich bevorzugt über einen Algorithmus, weiter bevorzugt unter Nutzung der geräteinternen Karte der Umgebung ermitteln, ob sich das die erfasste Kennung aussendende Sendegerät beispielsweise in einem Nachbarraum oder noch weiter entfernt, weiter beispielsweise außerhalb der Wohnung oder des Hauses befindet. Hiervon abhängig verhält sich das selbsttätig verfahrbare Gerät. So ist bevorzugt bei einer Ortung eines bekannten Sendegerätes in einem Nachbarraum, dass das selbsttätig verfahrbare Gerät diesen Raum nicht befährt, um so beispielsweise die sich dort mit dem Sendegerät befindende Person nicht zu stören. Weiter beispielhaft ist bei einer Ortung eines bekannten Sendegerätes außerhalb der Wohnung ein Verfahren des Gerätes zu einer Ruheposition auslösbar. Durch intervallartiges Erfassen derselben bekannten Kennung innerhalb eines Zeitraumes und hierbei über die Stärke des Signals ermittelter Entfernung zum Sendegerät ist weiter feststellbar, ob sich die das Sendegerät tragende Person dem selbsttätig verfahrbaren Gerät nähert oder sich von diesem entfernt, was wiederum bevorzugt unterschiedliche Verhaltensstrategien des Gerätes hervorruft. Bezüglich der vorerwähnten Alarmfunktion ist weiter bevorzugt, dass diese erst dann ausgelöst wird, wenn aufgrund der Signalstärke auf eine Ortung des unbekannten Sendegerätes innerhalb der Wohnung oder des Hauses zu schließen ist.

In weiter bevorzugter Ausgestaltung weist das Gerät eine Einrichtung auf zur Ermittlung aktueller Zeitdaten, wie insbesondere Uhrzeit und Datum, wobei weiter bevorzugt einer erfassten Kennung, insbesondere einer gefundenen und nicht gespeicherten Kennung die aktuellen Zeitdaten zugeordnet werden. Entsprechend verfügt das Gerät bevorzugt innerhalb der Elektronik über ein Datums-/Uhrenmodul. Die Elektronik ist hierbei so ausgelegt, dass das Gerät bei jeder Erfassung einer Kennung eines insbesondere mobilen Sendegerätes ein von dem Modul erhaltenes Datum und eine Uhrzeit zuordnet.

Auch ist bevorzugt vorgesehen, dass das Gerät eine Kartographie der Umgebung aufweist, so insbesondere eine in dem Gerät hinterlegte Kartographie des Gebietes, beispielsweise einer Wohnung, welche Kartographie selbsttätig beispielsweise vor einer Erstnutzung des Gerätes erstellt wird oder alternativ im Zuge einer benutzergeführten Lernfahrt. Unter Nutzung einer solchen Kartographie und der weiter vorgesehenen berührungsfreien und/oder berührend arbeitenden Sensorik zur Erfassung von Gegenständen, ist über die Elektronik des Gerätes eine eindeutige Positionierung innerhalb der Umgebung ermöglicht. Bevorzugt werden bei Erfassen einer Kennung die zum Zeitpunkt der Erfassung aus der Kartographie ermittelten Kartographiedaten der Kennung zugeordnet. In diesem Zusammenhang ist weiter bevorzugt, dass aus der Kartographie heraus eine errechnete Ortsangabe hinzugeführt wird, die den Ort der Erfassung der Kennung bezeichnet. Die Ortsangabe ist in einer bevorzugten Ausgestaltung ein im Gerätespeicher hinterlegter Raumname (beispielsweise Schlafzimmer, Wohnzimmer usw.) oder eine vom Anwender zugeordnete und festgelegte Raumnummer. In weiter bevorzugter Ausgestaltung wird der erfassten Kennung die Positionsangabe bevorzugt in Form von Koordinaten zugeordnet.

Zudem ist bevorzugt, dass zusammen mit der Kennung die zugeordneten Zeitdaten und/oder die zugeordneten Kartographiedaten in einem bevorzugt nicht flüchtigen Speicher gespeichert werden. Entsprechend wird bevorzugt ein Datensatz bestehend aus der erfassten Kennung sowie den Zeitdaten bezüglich des Zeitpunktes der Erfassung der Kennung und/oder die Kartographiedaten zum Zeitpunkt der Erfassung als Datensatz abgespeichert. Diese unterstützenden Informationen können insbesondere bei Erfassung einer nicht bekannten, d.h. nicht abgespeicherten Kennung und damit bei einer Bewertung eines eventuellen Alarmfalls zur Klärung des Vorfalls beitragen.

Die Erfindung betrifft weiter ein selbsttätig verfahrbares Gerät, insbesondere Reinigungsgerät zur Reinigung eines Bodens, wie ein Saug- und/oder Kehrroboter, bevorzugt mit einer berührungsfreien und/oder berührend arbeitenden Sensorik zur Erfassung von Gegenständen, weiter mit einer Empfangseinrichtung für drahtlose Signale, wie Bluetooth, W-Lan, ZigBee oder andere kabellose Übertragungsverfahren, weiter wie UMTS, DECT, GSM oder andere Mobilfunkstandards, und einem flüchtigen Speicher.

Geräte der in Rede stehenden Art sind, wie eingangs bezüglich des Verfahrens beschrieben, bekannt.

Hinsichtlich des Gerätes selbst wird in Bezug auf die Sensorik zur Erfassung von Gegenständen wird bspw. auf die DE 103 57 936 A1, DE 10 2008 061 259 A1, DE 10 2008 014 912 A1 und DE 10 2009 023 066 A1 verwiesen. Die erwähnten Ausgestaltungen bezüglich der Orientierung und/oder des Anlegens einer Kartografie und/oder bezüglich einer Verfahrstrategie sind beispielsweise aus der DE 10 2009 041 362 A1, DE 10 2009 059 217 A1, DE 10 2010 000 317 A1, DE 10 2010 000174 A1 und DE 10 2010 017 689 A1 bekannt.

Im Hinblick auf das selbsttätig verfahrbare Gerät bevorzug in dem Gerät, weiter insbesondere dem hierin bevorzugt vorgesehenen nicht flüchtigen Speicher bestimmte Sendegeräte individualisierende Kennungen gespeichert, so insbesondere zur Identifikation von Kennungen im kabellosen Übertragungsverfahren, beispielsweise in Form von Mobilfunknummern, IP-Nummern oder anderen Kennungen. Zum Empfang und Identifizierung von insbesondere Mobilfunkgeräten sind in dem nicht flüchtigen Speicher bevorzugt diesbezügliche Mobilfunk-Rufnummern oder dergleichen hinterlegt. Es ist hierbei eine vorhandene Einzelfunktion des selbsttätig verfahrbaren Gerätes genutzt, nämlich den Empfang solcher drahtlosen Signale. Derartige Signale werden nach dem Empfang durch das Gerät bevorzugt unter Nutzung einer entsprechenden Auswertesoftware mit den gespeicherten Kennungen im nicht flüchtigen Speicher verglichen. Infolge eines solchen Abgleiches ist das selbsttätig verfahrbare Gerät in der Lage, zwischen ihm bekannten und nicht bekannten bevorzugt mobilen Geräten, wie Handys, Notepads oder dergleichen zu unterscheiden, wobei in Abhängigkeit von der vom Sendegerät individualisierten Kennung unterschiedliche Handlungen des Gerätes auslösbar sind, ohne dass der Benutzer willensbetont mittels des Sendegerätes einen Befehl per Signal übermittelt. So sind insbesondere bei Erfassung einer gespeicherten Kennung andere Handlungen des Gerätes auslösbar als bei Erkennung einer nicht gespeicherten und somit unbekannten Kennung, wobei weiter bevorzugt die Erfassung einer gespeicherten und somit bekannten Kennung eine andere Handlung des Gerätes auslösen kann als bei Erfassung einer weiteren gespeicherten und somit bekannten Kennung. Zufolge der vorgeschlagenen Lösung ist insbesondere durch den Benutzer des Gerätes oder einer anderen Person keine gezielte Befehlsauslösung über das Sendegerät zur Auslösung einer Handlung des Gerätes erforderlich. Vielmehr ist allein das Vorhandensein des Sendegerätes im Empfangsbereich des selbsttätig verfahrbaren Gerätes ausreichend. Entsprechend ermöglicht die vorgeschlagene Lösung ein Reagieren des selbsttätig verfahrbaren Gerätes bevorzugt allein, weiter jedoch auch in Kombination mit bekannten Befehlseingaben, bspw. kabellose Befehlseingaben über Funk oder dergleichen, infolge Vorhandensein eines Sendegerätes und damit einhergehendem Empfang dessen Kennung.

In einer bevorzugten Ausgestaltung ist vorgesehen, dass bei Erkennung einer nicht gespeicherten Kennung eine Alarmfunktion auslösbar ist. Diese Alarmfunktion ist in einer bevorzugten Ausgestaltung zeitlich begrenzt aktiviert, so insbesondere zufolge entsprechender Befehlseingabe durch eine berechtigte Person. Wird entsprechend ein drahtloses Signal eines Sendegerätes erfasst, dessen individuelle Kennung nicht in dem nicht flüchtigen Speicher des Gerätes hinterlegt ist, ist dies von dem selbsttätig verfahrbaren Gerät, sofern diese Funktion entsprechend freigeschaltet ist, als Vorhandensein einer nicht im Umfeld des selbsttätig verfahrbaren Gerätes sich berechtigt aufhaltenden Person auswertbar. Daraufhin ist bevorzugt selbsttätig eine Alarmfunktion auslösbar, beispielsweise indem das selbsttätig verfahrbare Gerät ein akustisches und/oder optisches Warnsignal abgibt. In weiterer bevorzugter Ausgestaltung ist durch die aktivierte Alarmfunktion durch das selbsttätig verfahrbare Gerät eine Überwachungskamera oder dergleichen, gegebenenfalls auch mehrere solcher Kameras aktivierbar, deren Bilder beziehungsweise Videostreams in einem bevorzugt mit Bezug zu dem selbsttätig verfahrbaren Gerät externen nicht flüchtigen Speicher ablegbar sind und/oder per SMS auf ein Mobilfunkgerät und/oder per Email weiterleitbar sind. Darüber hinaus ist auch eine Übertragung der Bilder im Internet auf einem Portal mit eigener Kennung per Livestream möglich. Die Übertragung der durch den Alarm zu übermittelnden Informationen erfolgt weiter bevorzugt mittels derselben Übertragungsverfahren wie eingangs beschrieben, wie etwa Bluetooth, W-Lan, ZigBee, UMTS, DECT oder GSM. Darüber hinaus verfügt in einer weiteren Ausgestaltung das Gerät über ein Display, auf welchem bei Auslösung einer Alarmfunktion die Erkennung einer nicht gespeicherten Kennung eines Sendegerätes anzeigbar sind, dies beispielsweise durch Anzeige eines entsprechenden Symbols und/ oder Blinken eines Symbols und/oder durch Anzeigen der erfassten Kennung, beispielsweise Anzeigen der übertragenen und erfassten Mobilfunknummer oder dergleichen.

In weiter bevorzugter Ausgestaltung ist bei Erkennung einer gespeicherten Kennung eine Verfahrroutine auslösbar. Entsprechend erfasst das selbsttätig verfahrbare Gerät bei Erkennung einer gespeicherten Kennung diese als Kennung eines sich im Umfeld des Gerätes berechtigt aufhaltenden Person und/oder eines berechtigt hinterlegten Sendegerätes. Bei Erfassen einer gespeicherten Kennung ist unter Nutzung einer entsprechenden Auswertesoftware eine in dem selbsttätig verfahrbaren Gerät hinterlegte Verfahrroutine abrufbar. Hierbei kann eine bestimmte Verfahrroutine ausgelöst werden, unabhängig davon, welche gespeicherte Kennung erfasst ist. Alternativ sind den in dem nicht flüchtigen Speicher gespeicherten Kennungen gegebenenfalls unterschiedliche Verfahrroutinen zugeordnet, so dass bei Erfassung einer gespeicherten Kennung eine andere Verfahrroutine gegebenenfalls auslösbar ist als bei Erkennung einer anderen gespeicherten Kennung.

Die ausgelöste Verfahrroutine bei Erkennung einer gespeicherten Kennung ist bevorzugt das Verlassen des Raumes, in welchem die gespeicherte Kennung erfasst wurde. Zufolge der bevorzugt hinterlegten Kartographie der Umgebung, insbesondere der Wohnung, ist das selbsttätig verfahrbare Gerät in der Lage, verschiedene Räume zu unterscheiden. Bei Erkennung einer gespeicherten Kennung ist entsprechend das verfahrbare Gerät in der Lage, die Anwesenheit einer berechtigten Person zu erkennen. Das selbsttätig verfahrbare Gerät reagiert bei Erkennung einer gespeicherten Kennung bevorzugt in der Form, dass dieses den Raum, in welcher das die gespeicherte Kennung aussendende Sendegerät sich befindet, nicht anfährt beziehungsweise diesen Raum verlässt. Es ist entsprechend eine Anpassung des Verhaltens des selbsttätig verfahrbaren Gerätes insbesondere in Abhängigkeit von der Anwesenheit von Personen, welche ein Sendegerät mit einer sich bevorzugt wiederholenden Aussendung einer individuellen, in dem flüchtigen Speicher des Gerätes hinterlegten Kennung mit sich trägt, gegeben. Das selbsttätig verfahrbare Gerät muss entsprechend nicht auf eine Zeit programmiert werden, in welcher dieses beispielsweise eine Reinigungs-Verfahrroutine zur Abreinigung des Fußbodens abruft. Vielmehr erkennt das Gerät zufolge des vorgeschlagenen Verfahrens, wann sich eine berechtigte Person im Haushalt befindet bzw. wann keine, ein gespeichertes Sendegerät bei sich führende Person vor Ort ist. In letzterem Fall startet das Gerät bevorzugt selbsttätig bspw. eine Reinigungsroutine.

Weiter bevorzugt ist bei Erkennung einer gespeicherten Kennung ein Verfahren des Gerätes zu einer Ruheposition auslösbar, so weiter insbesondere in dem Fall, dass mit der gespeicherten, erkannten Kennung eine solche Verfahrroutine hinterlegt ist. So verfährt das selbsttätig verfahrbare Gerät bei Erfassung einer gespeicherten Kennung bevorzugt zurück zu einer dem Gerät zugeordneten Basisstation, in oder auf welcher das selbsttätig verfahrbare Gerät in einer Parkposition verbleibt. In einer solchen Basisstation erfolgt bevorzugt ein Aufladen der geräteseitigen Akkumulatoren und/oder eine Entleerung eines gegebenenfalls vorgesehenen Schmutzsammelbehälters bei Ausgestaltung des Gerätes als Bodenreinigungsgerät. Weiter bevorzugt ist eine Verfahr- bzw. Reinigungsstrategie des Gerätes auslösbar, sobald die, das Verfahren des Gerätes zu der Ruheposition auslösende Kennung nicht weiter vom Gerät erfasst ist. Bevorzugt startet hiernach ein als Bodenreinigungsgerät ausgebildetes Gerät seine Reinigungsfahrt, schließt gegebenenfalls an die zuvor unterbrochene Reinigungsfahrt am Ort der Unterbrechung wieder an.

In weiter bevorzugter Ausgestaltung weist das Gerät eine Einrichtung zur Ermittlung aktueller Zeitdaten auf, insbesondere Uhrzeit und Datum. Hierbei handelt es sich bevorzugt um ein Datums-/Uhrenmodul, welches weiter bevorzugt in der geräteseitigen Elektronik integriert ist. Ein solches Datums-/Uhrenmodul ist in weiter bevorzugter Ausgestaltung auch dazu genutzt, das Gerät zu bestimmten Zeitpunkten zu aktivieren bzw. deaktivieren. Bei bestimmten Ereignissen können die aktuell ermittelten Zeitdaten als Zeitstempel genutzt werden.

In diesem Zusammenhang erweist es sich von Vorteil, wenn, wie weiter bevorzugt, das Gerät einen bevorzugt nicht flüchtigen Speicher aufweist, zur Speicherung erfasster Kennungen zusammen mit zum Zeitpunkt der Erfassung ermittelter Zeitdaten und/oder Kartographiedaten einer in dem Gerät hinterlegten Kartographie. Es werden entsprechend bevorzugt Datensätze in dem Speicher abgelegt, insbesondere bei Erfassung einer nicht gespeicherten Kennung, welche gegebenenfalls eine Alarmfunktion auslöst. Eine solche nicht gespeicherte Kennung, darüber hinaus jedoch auch gespeicherte und somit bekannte Kennungen, werden bevorzugt zusammen mit dem generierten Zeitstempel als Datensatz in dem Speicher abgelegt. Verfügt das Gerät über eine Kartographie insbesondere der Umgebung, wie eingangs beschrieben, so ist in einer weiter bevorzugten Ausgestaltung alternativ, weiter bevorzugt kombinativ zu dem Zeitstempel auch die Positionsangabe des Gerätes in der Umgebung mit der erfassten Kennung abspeicherbar. Diese unterstützenden Informationen des Datensatzes können beispielsweise bei der Bewertung eines Alarmfalles zur Klärung des Vorfalles beitragen.

Hinsichtlich ergänzender oder alternativer Merkmale im Zusammenhang mit dem selbsttätig verfahrbaren Gerät gilt für deren anspruchsmäßige Zuordnung das Gleiche wie oben bezüglich der verfahrensbezogenen Merkmale ausgeführt.

Nachstehend ist die Erfindung anhand der beigefügten Zeichnung erläutert, die aber lediglich ein Ausführungsbeispiel darstellt. Auf der Zeichnung zeigt:
- Fig. 1: in schematischer perspektivischer Darstellung ein selbsttätig verfahrbares Gerät in Form eines Reinigungsgerätes zur Reinigung eines Bodens in einer Wohnungsumgebung bei Erfassen einer von einem Sendegerät ausgesandten Kennung;

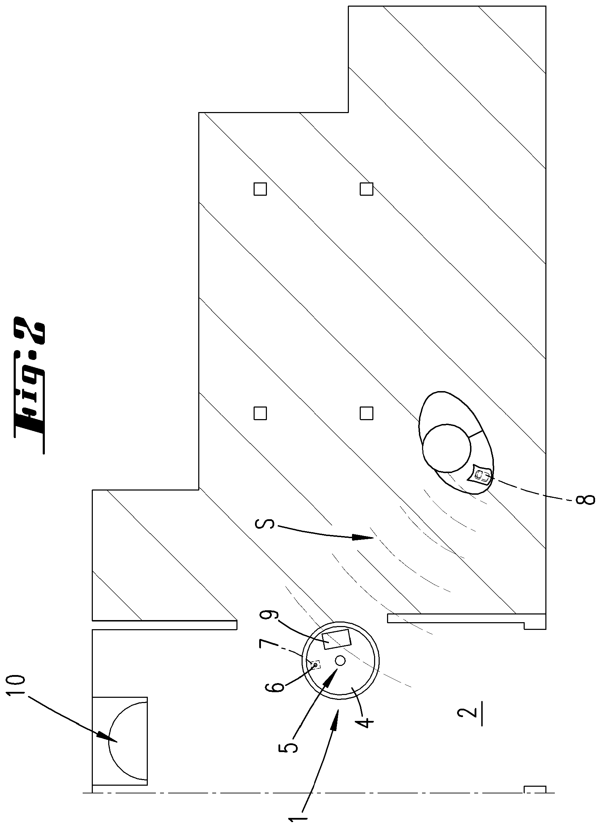

- Fig. 2: die schematische Draufsicht zu der Situation in Fig. 1;
- Fig. 3: ein Programmablaufplan bezüglich Scannen und Datenaufnahme von drahtlosen Signalen;
- Fig. 4: ein Programmablaufplan betreffend die Verhaltensstrategie des Gerätes zur Reinigung der gesamten Wohnung;
- Fig. 5: eine der Fig. 4 entsprechende Darstellung, jedoch einen Programmablaufplan bezüglich der Reinigung von einzelnen Räumen betreffend.

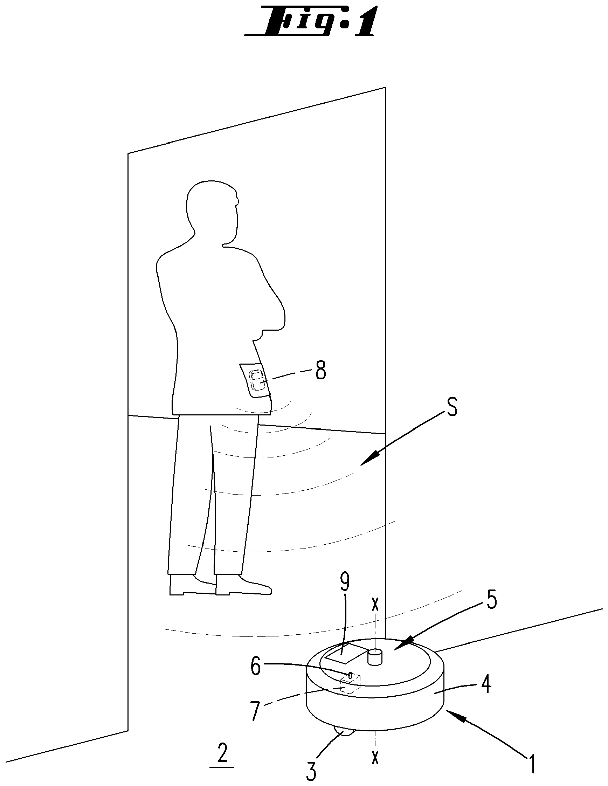

Dargestellt und beschrieben ist zunächst mit Bezug zu Fig. 1 ein Gerät 1 in Form eines Saug- und/oder Kehrgeräts, weiter in Form eines verfahrbaren Haushalts-Bodenreinigungsgerätes. Dieses besitzt ein Chassis, welches unterseitig, dem zu pflegenden Boden 2 zugewandt, elektromotorisch angetriebene Verfahrräder 3 sowie bevorzugt eine über die Unterkante des Chassisbodens hinausragende, gleichfalls elektromotorisch angetriebene Bürste trägt. Das Chassis ist überfangen von einer Gerätehaube 4, wobei das Gerät einen kreisförmigen Grundriss aufweist. Bezüglich der Ausgestaltung des Gerätes 1 als Saug- und/oder Kehrgerät wird auf die DE 102 42 257 A1 verwiesen. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Weiter kann, wenngleich nicht dargestellt, das Gerät 1 zusätzlich oder auch alternativ zu der Bürste eine Saugmundöffnung aufweisen. In diesem Fall ist in dem Gerät 1 weiter ein Sauggebläsemotor angeordnet, der elektrisch betrieben ist.

Die Elektroversorgung der einzelnen Elektrokomponenten des Gerätes 1, wie für den Elektromotor der Verfahrräder 3, für den Elektroantrieb der Bürste, ggf. für das Sauggebläse und darüber hinaus für die weiter vorgesehene Elektronik in dem Gerät 1 zur Steuerung desselben erfolgt über einen nicht dargestellten, wiederaufladbaren Akkumulator.

Das Gerät 1 ist weiter bevorzugt mit einer Sensorik 5 versehen. Diese ist oberseitig der Gerätehaube 4 des Gerätes 1 angeordnet und um eine vertikale Achse x, welche zugleich die Zentralvertikalachse des Gerätes 1 darstellt, drehbar. Die Sensorik 5 besteht bevorzugt aus einem Triangulationssystem.

Bei dem Triangulationssystem handelt es sich um ein optisches System, wobei bevorzugt in einer Ausgestaltung ein Sender in Form einer Lichtquelle, weiter in Form einer LED oder Laserdiode, vorgesehen ist, wobei weiter die Lichtquelle monochromatisches Licht aussendet, so weiter bevorzugt für den Menschen nicht sichtbares Licht, bspw. Infrarotlicht. Weiter weist das Triangulationssystem einem Empfänger auf, dies weiter bevorzugt in Form eines lichtempfindlichen Elements. Hierbei handelt es sich bspw. um ein PSD-Element oder auch um ein CCD- oder CMOS-Element in bevorzugt linienförmiger, d.h. eindimensionaler Bauweise. Weiter bevorzugt ist Bestandteil des Empfängers auch eine Empfängerlinse, die dem lichtempfindlichen Element vorgeschaltet ist.

Mit Hilfe der vorbeschriebenen Sensorik 5 ist zunächst eine Hinderniserkennung durchführbar, so dass das Gerät 1 kollisionsfrei sich auf dem Boden 2 bzw. in seiner Umgebung bewegen kann. Darüber hinaus ist, wie weiter bevorzugt, über die Sensorik 5 ein Rundum-Abscannen der Umgebung ermöglicht, wobei die hier ermittelten Entfernungswerte zu Hindernissen und Gegenständen, weiter zu Wänden in der Umgebung zur Erstellung einer Kartografie genutzt werden, welche Kartografie in dem Gerät 1 abgespeichert und hinterlegt wird. Die Kartografie kann darüber hinaus auch alternativ oder ergänzend im Rahmen einer ersten, benutzergeführten Lernfahrt des Gerätes 1 erstellt werden. Zufolge der hinterlegten Kartografie und eines Scannens der Umgebung bevorzugt mittels der Sensorik 5 ist das Gerät 1 in der Lage, die eigene Position in dessen Umgebung bzw. in der Kartografie eindeutig zu bestimmen.

Zur Steuerung des Gerätes 1, bspw. zur Befehlsübermittlung, weiter bspw. zur Aktivierung oder Deaktivierung desselben ist weiter bevorzugt eine Infrarotschnittstelle oder Ultraschallschnittstelle vorgesehen.

Zur Übermittlung von Informationen an das Gerät 1 weist das Gerät 1 bevorzugt kombinativ zu dem vorerwähnten Licht- oder Ultraschallsensor eine Funkantenne 6 auf. Diese ist verbunden mit einer geräteinternen Empfangseinrichtung 7. Bezüglich der Empfangseinrichtung 7 handelt es sich bevorzugt um eine Einrichtung zur Erfassung von drahtlosen Signalen, wie beispielsweise Bluetooth, W-Lan, Zigbee oder andere kabellose Übertragungsverfahren, weiter bspw. UMTS, DECT, GMS oder andere Mobilfunkstandards. Bevorzugt ist die Empfangseinrichtung 7 geeignet zum Empfang mehrerer unterschiedlicher Signale der vorbeschriebenen Art. Auch kann die Empfangseinrichtung 7 mit der Funkantenne 6 kombiniert sein mit einer Sendeeinrichtung für solche drahtlosen Signale, beispielsweise zur kabellosen Weiterleitung von Informationen an einen entsprechenden Signalempfänger, wie bspw. ein Mobilfunk-Telefon oder ein Notepad oder darüber hinaus zufolge drahtloser Verbindung über W-Lan an einen Computer, der über eine entsprechende Internetverbindung auch außerhalb der von dem Gerät befahrenen Räumlichkeiten stehen kann.

Zufolge der Anordnung vorbeschriebener Empfangseinrichtung 7 ist das Gerät 1 in der Lage, entsprechende drahtlose Signale, beispielsweise von Fernbedienungen zu empfangen, über welche Fernbedienung der Benutzer insbesondere Befehle zum Verfahren und/oder Abreinigen von Böden willensbetont übermitteln kann. Darüber hinaus ist mittels einer solchen Fernbedienung auch beispielsweise eine Fernfahrsteuerung des Gerätes 1 insbesondere im Rahmen einer Lernfahrt zur Anlegung einer Kartierung oder dergleichen ermöglicht.

Darüber hinaus ist das Gerät 1 mittels der Empfangseinrichtung 7 in der Lage, auch kontinuierliche oder sich wiederholende drahtlose Signale zu empfangen, die nicht willensbetont durch den Benutzer beispielsweise zufolge Tastendruck einer Fernbedienung oder dergleichen ausgesandt werden. Derartige sich insbesondere wiederholende Signale senden insbesondere mobile Elektronikgeräte aus, die sich unter Nutzung des ausgesendeten Signals in ein zugeordnetes Netz einwählen oder einzuwählen versuchen. So sendet beispielsweise ein Mobilfunk-Telefon wiederholt drahtlose Signale aus, welche Signale eine individuelle Kennung zur Identifizierung des Sendegerätes 8 beinhaltet, um sich so in ein Mobilfunknetz ordnungsgemäß einzuwählen. Ein solches drahtloses Signal unterliegt den bekannten Mobilfunkstandards, wie insbesondere UMTS, DECT oder GSM. Die individuelle Kennung des Sendegerätes 8 in Form eines Mobilfunk-Telefons ist insbesondere die Mobilfunk-Telefonnummer.

Weitere drahtlose Sendegeräte 8 sind beispielsweise Notebooks oder Notepads, welche insbesondere über Bluetooth oder W-Lan unter Aussenden eines entsprechenden drahtlosen Signals versuchen, sich in ein Computernetzwerk einzuwählen bzw. diese Verbindung zu halten. Auch hierbei werden individuelle Kennungen des jeweiligen Sendegerätes 8 ausgesandt, welche Kennung im Falle des Sendegerätes 8 beispielsweise in Form eines Notepads die IP-Nummer ist.

Die vorbeschriebene Möglichkeit des Empfangs von in der Umgebung des Gerätes 1 ausgesandten Signalen S, welche individualisierte Kennungen beinhalten, ist genutzt, um die Verhaltens- und/oder Verfahrstrategie des Gerätes 1 zu beeinflussen.

So verfügt das Gerät 1 weiter über einen nicht flüchtigen Speicher, in welchem eine oder mehrere Kennungen zur Identifizierung bekannter Sendegeräte 8 hinterlegt sind.

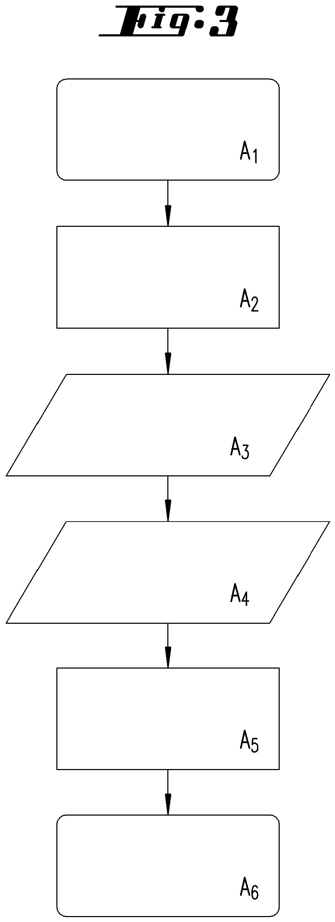

Diese in dem nicht flüchtigen Speicher zu hinterlegende Kennungen können durch den Benutzer beispielsweise per Tasteneingabe (gegebenenfalls auch über eine dem Gerät 1 zugeordnete Fernbedienung oder dergleichen, weiter beispielsweise über einen drahtgebundenen oder drahtlos angeschlossenen Personalcomputer) eingegeben werden. Bevorzugt wird diesbezüglich ein Verfahren, in welchem das Gerät 1 die abzuspeichernden Kennungen selbsttätig erfasst und ablegt. Ein solches Verfahren ist beispielhaft an dem Programmablaufplan in Fig. 3 beschrieben.

So erfolgt bevorzugt vor einer Erstbenutzung des Gerätes 1, ggf. aber auch nach einem durch den Benutzer beispielsweise durchgeführten Reset, ein Scannen der vom Gerät 1 zu befahrenden und bevorzugt abzureinigenden Umgebung, beispielsweise eine Wohnung, nach etwaigen abzuspeichernden Signalen (Programmpunkt A₁ in Fig. 3 symbolisiert den Start eines solchen Programms). Das Gerät 1 fährt nach entsprechender Befehlseingabe zum Scannen und zur Datenaufnahme von Signalen S bevorzugt selbsttätig, bevorzugt die hinterlegte Kartierung der Umgebung, insbesondere der Wohnung, nutzend, durch die ihm bekannte Umgebung und registriert hierbei mittels der Empfangseinrichtung 7 alle Signale S, die dem Übertragungsverfahren entsprechen, auf welchem die Empfangseinrichtung 7 ausgerichtet ist. Hierbei werden die über die Signale S mitgelieferten individualisierten Kennungen der in der Umgebung des Gerätes 1 erfassten Sendegeräte 8 erfasst und bevorzugt zunächst in einem gegebenenfalls flüchtigen Speicher abgelegt (Programmpunkt A₂).

Die erfassten und zunächst bevorzugt temporär abgespeicherten Kennungen der im Rahmen des Abfahrens der Umgebung durch das Gerät 1 erfassten Signale werden hiernach bevorzugt zunächst dem Benutzer angezeigt (Programmpunkt A₃. Hierzu ist das Gerät 1 bevorzugt mit einem in der Decke der Gerätehaube 4 angeordneten Display 9 versehen. Denkbar ist diesbezüglich auch die drahtlose oder in diesem Fall ggf. auch drahtgebundene Übertragung der gefundenen Kennungen an ein vom Benutzer zu bedienendes Lesegerät, wie bspw. ein Computer oder ein dem Gerät 1 bekanntes Mobilfunkgerät. Auch besteht diesbezüglich die Möglichkeit, dass der Benutzer ein Mobilfunkgerät nutzt, mit einer Applikation, über welche die in dem Gerät 1 zunächst bevorzugten temporär gespeicherten Kennungen abgerufen und angezeigt werden können. Der Benutzer wählt hiernach bevorzugt die Kennungen aus, die als bekannte Kennungen für das Gerät 1 in dessen nicht flüchtigen Speicher abgelegt werden sollen (Programmpunkt A₄).

Eine entsprechende Software in dem Gerät 1 speichert hiernach die ausgewählten Kennungen, beispielsweise dem Benutzer bekannte Handynummern und/oder IP-Nummern, in dem eine Signaldatenbank darstellenden nicht flüchtigen Speicher ab (Programmpunkt A₅).

Hiernach wird das Programm zum Scannen und zur Datenaufnahme von Kennungen beendet (Programmpunkt A₆), wonach bevorzugt zuvor erfasste, jedoch durch den Benutzer nicht bestätigte Kennungen gelöscht sind.

Den hiernach zufolge Abspeichern der jeweiligen Kennung dem Gerät 1 bekannten Sendegeräten 8 sind entsprechend bevorzugt etwaige Verhaltens- und/oder Verfahrensstrategien des Gerätes 1 zugeordnet. Diesbezüglich ist insbesondere im Programmpunkt A₄ in einer bevorzugten Ausgestaltung vorgesehen, dass der Benutzer bei Auswahl ihm bekannter Kennungen zugleich jeder Kennung eine Verhaltens- und/oder Verfahrensstrategie des Gerätes 1 zuordnet. So ist beispielsweise der Kennung eines Mobilfunk-Telefones eines Familienmitgliedes eine Verhaltensstrategie zugeordnet, die das Gerät 1 bei Erfassen dieser Kennung veranlasst, den Raum, in dem das entsprechende Sendegerät 8 geortet wird, nicht zu befahren und gegebenenfalls abzureinigen. Der Kennung eines Sendegerätes 8 eines weiteren Familienmitgliedes kann beispielsweise die Strategie zugeordnet sein, dass das Gerät 1 bei entsprechendem Empfang dieser Kennung die ggf. begonnene Reinigungsarbeit unterbricht bzw. nicht antritt.

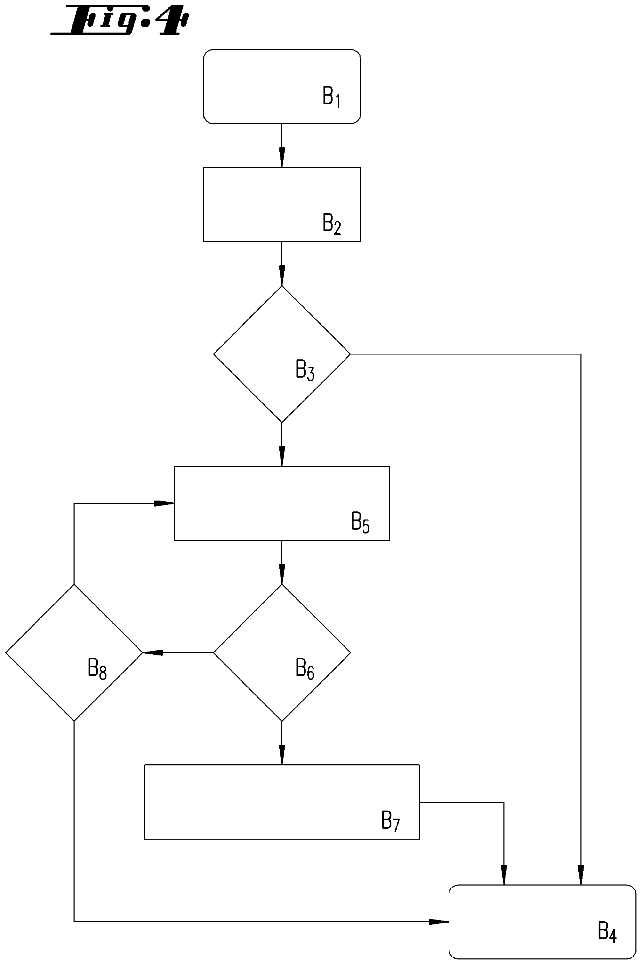

In Fig. 4 ist ein beispielhafter Programmablauf dargestellt, bei welchem die Abreinigung der gesamten Umgebung, beispielsweise der gesamten Wohnung oder eines Hauses nur erfolgen soll, wenn keine bekannte Kennung erfasst wird. Unter Programmpunkt B₁ startet das Reinigungsprogramm der Wohnung. So startet das Gerät 1 bevorzugt zu einer vorgegebenen Uhrzeit das Programm, weiter bevorzugt unter Verlassen einer insbesondere dem Aufladen der geräteseitigen Akkumulatoren und gegebenenfalls der Entleerung eines geräteseitigen Staubsammelbehälters dienenden Basisstation 10.

Das Gerät 1 sucht hiernach zunächst in der ihm bekannten Umgebung (beispielsweise Wohnung) nach bekannten, entsprechend in dem nicht flüchtigen Speicher hinterlegten Signalen bzw. Kennungen (Programmpunkt B₂).

Wird im Programmpunkt B₃ eine bekannte Kennung eines Sendegerätes 8, beispielsweise ein Mobilfunk-Telefon, das vom Benutzer getragen wird (vgl. Fig. 1), gefunden, so beendet das Gerät 1 das Programm, bevorzugt ohne eine Reinigungsarbeit vorzunehmen, indem dieses zurück zur Basisstation 10 in die Ruheposition verfährt (Programmpunkt B₄).

Wird hingegen keine bekannte Kennung gefunden, so startet das Gerät die Abreinigung des Bodens, bevorzugt der gesamten Wohnung gemäß einer in dem Gerät 1 hinterlegten Reinigungs- und Verfahrstrategie. Hierbei überwacht das Gerät 1, insbesondere die Empfangseinrichtung 7, zugleich weiterhin die Umgebung auf bekannte Kennungen aufweisende Signale (Programmpunkt B₅). Wird hierbei ein bekanntes, entsprechend in dem nicht flüchtigen Speicher hinterlegtes Signal S bzw. Kennung erfasst (Programmpunkt B₆), so beendet das Gerät 1 den Reinigungsmodus (Programmpunkt B₇) und verfährt hiernach selbsttätig zurück zur Basisstation (Programmpunkt B₄).

In dem Fall, dass keine bekannte Kennung im Zuge der Reinigungsfahrt erkannt wird, erfolgt programmtechnisch eine Abfrage dahingehend, ob die Reinigung des Bodens der Umgebung insgesamt beendet ist oder ein Aufladen der geräteseitigen Akkumulatoren erforderlich ist (Programmpunkt B₈). Hiervon abhängig verfährt das Gerät 1 selbsttätig zurück zur Basisstation 10 oder setzt die Reinigung des Bodens im Programmpunkt B₅ fort.

Alternativ und auch kombinativ zu dem vorgeschriebenen Programmablauf kann im Falle der Programmpunkte B₃ und/oder B₆ bei Erfassen einer Kennung, die in dem nicht flüchtigen Speicher nicht abgelegt und somit unbekannt ist, eine Alarmfunktion ausgelöst werden, so beispielsweise durch Auslösen eines akustischen oder optischen Alarms an dem Gerät 1 oder zufolge entsprechender Funkübertragung durch eine beispielsweise in dem Haus, in welchem sich das Gerät 1 befindet, installierten Alarmanlage. Darüber hinaus ist auch beispielsweise eine Funkübermittlung des Alarms auf externe Geräte, beispielsweise auf ein Mobilfunk-Telefon mit hinterlegter Kennung möglich und/oder auch das Aktivieren einer oder mehrerer Kameras in der Umgebung, deren Bilder bevorzugt an den Benutzer oder eine Überwachungseinrichtung übermittelt werden.

Vorteilhaft erweist sich in diesem Zusammenhang weiter, wenn, wie bevorzugt, bei Erfassung von nicht bekannten Kennungen, die eine Alarmfunktion auslösen können, zusätzlich zu diesen Kennungen aktuelle Zeitdaten, wie insbesondere Datum und Uhrzeit, in Form eines Zeitstempels der erfassten Kennung zugeordnet werden. Diese Daten werden insgesamt bevorzugt in Form eines Datensatzes in einem nicht flüchtigen Speicher des Gerätes abgelegt. Entsprechend besteht auch nachträglich die Möglichkeit einer Nachvollziehbarkeit, zu welchem Zeitpunkt welche Kennung erfasst wurde. Bevorzugt wird diesbezüglich weiter auch eine Ortsangabe zum Zeitpunkt der Erfassung der Kennung, insbesondere nicht bekannten Kennung, ermittelt und mit der Kennung abgespeichert, gegebenenfalls zusätzlich zu der Zeitangabe. Die Ortsbestimmung erfolgt hierbei bevorzugt unter Nutzung einer in dem Gerät hinterlegten Kartographie der Umgebung, wobei unter Nutzung der Sensorik 5 und Abgleich der hinterlegten Kartographie eine genaue Positionsbestimmung innerhalb der Umgebung erreicht wird. Die bevorzugt mit der Kennung abgespeicherte Ortsangabe zum Zeitpunkt der Erfassung der Kennung ist bevorzugt ein hinterlegter Raumname oder eine festgelegte Raumnummer. Darüber hinaus können auch zur Ortsangabe die exakten Koordinaten innerhalb der Kartographie abgespeichert werden.

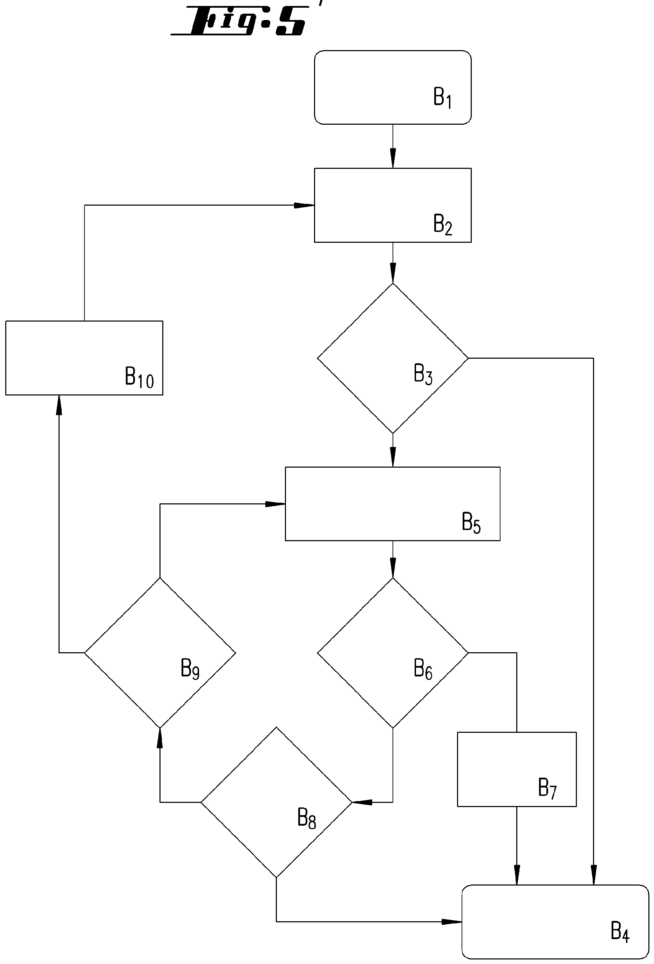

In Fig. 5 ist ein Programmablauf dargestellt, welcher im Wesentlichen auf dem Programmablauf gemäß Fig. 4 basiert, hier jedoch nicht der Abreinigung der gesamten Umgebung, insbesondere der gesamten Wohnung dient, sondern vielmehr der Abreinigung einzelner Räume nacheinander.

So erfolgt im Programmpunkt B₂ entsprechend lediglich das Scannen von Kennungen beinhaltenden Signalen S in dem Raum, in welchem sich das Gerät 1 befindet bzw. in welchen das Gerät 1 gerade hineinfährt. Hierbei wird über die Empfangseinrichtung 7 nicht nur ein Signal S mit einer ggf. bekannten, entsprechend gespeicherten Kennung erfasst, sondern darüber hinaus auch die Signalstärke, die auf die relative Entfernung des Sendegerätes 8 zu dem Gerät 1 schließen lässt.

Im nachfolgenden Programmpunkt B₃ wird entsprechend bei Nichterfassen eines Signals S in einer vorgegebenen oder sich innerhalb einer Bandbreite befindlichen Signalstärke mit einer bekannten Kennung die Reinigung des Raumes im Programmpunkt B₅ gestartet bzw. fortgesetzt, dies weiter bevorzugt bei gleichzeitigem weiteren Scannen des Raumes auf Empfang von entsprechenden Signalen (Programmpunkt B₆).

Während im Programmpunkt B₈ die Beendigung der Reinigungsarbeit in der vollständigen Umgebung, d.h. beispielsweise in der gesamten Wohnung, (und/oder die erforderliche Aufladung der Akkumulatoren) abgefragt wird, wird in einem zwischen den Programmpunkten B₈ und B₅ zwischengeschalteten Programmpunkt B₉ geprüft, ob die Abreinigung des Raumes, in welchem sich das Gerät 1 befindet, fertiggestellt ist. Ist dies der Fall, so verfährt das Gerät 1 bevorzugt selbsttätig in den nächsten, bevorzugt abzureinigenden Raum (Programmpunkt B₁₀) und setzt hiernach im Programmpunkt B₂ erneut an, um diesen Raum nach bekannten Signalen S in der vorgegebenen Signalstärke zu scannen.

## Patentansprüche

1. Verfahren zum Betreiben eines selbsttätig verfahrbaren Geräts (1), insbesondere Reinigungsgerät zur Reinigung eines Bodens (2) wie ein Saug- und/oder Kehrroboter, bevorzugt mit einer berührungsfreien und/oder berührend arbeitenden Sensorik (5) zur Erfassung von Gegenständen, weiter mit einer Empfangseinrichtung (7) für drahtlose Signale wie Bluetooth, W-Lan, ZigBee oder andere kabellose Übertragungsverfahren, weiter wie UMTS, DECT, GSM oder andere Mobilfunkstandards, und einem nicht flüchtigen Speicher des Gerätes (1), wobei der nicht flüchtige Speicher ein Speicher des Gerätes (1) ist, in welchem bestimmte Sendegeräte (8) individualisierende Kennungen gespeichert sind, wobei von der Empfangseinrichtung (7) empfangene Signale mit den gespeicherten Kennungen verglichen werden, wobei in Abhängigkeit von einer Erkennung einer, ein bestimmtes Sendegerät (8) individualisierenden Kennung als gespeicherte oder nicht gespeicherte Kennung unterschiedliche Handlungen des Gerätes (1) ausgelöst werden, **dadurch gekennzeichnet, dass** keine gezielte Befehlsauslösung über das Sendegerät (8)zur Auslösung einer Handlung des Gerätes (1) erforderlich ist.

2. Verfahren nach Anspruch 1, **dadurch gekennzeichnet, dass** bei Erkennung einer nicht gespeicherten Kennung eine Alarmfunktion ausgelöst wird.

3. Verfahren nach einem der vorhergehenden Ansprüche, **dadurch gekennzeichnet, dass** bei Erkennung einer gespeicherten Kennung eine Verfahrroutine ausgelöst wird.

4. Verfahren nach Anspruch 3, **dadurch gekennzeichnet, dass** bei Erkennung einer gespeicherten Kennung ein Verfahren des Gerätes (1) zu einer Ruheposition ausgelöst wird.

5. Verfahren nach einem der vorhergehenden Ansprüche, **dadurch gekennzeichnet, dass** eine gefundene Kennung angezeigt wird.

6. Verfahren nach Anspruch 5, **dadurch gekennzeichnet, dass** durch Bestätigen einer angezeigten Kennung eine Speicherung der Kennung in dem nicht flüchtigen Speicher durchgeführt wird.

7. Verfahren nach einem der vorhergehenden Ansprüche, **dadurch gekennzeichnet, dass** eine Auslösung einer Handlung des Gerätes (1) in Abhängigkeit von einer bestimmten Stärke des Signals (S) erfolgt.

8. Verfahren nach einem der vorhergehenden Ansprüche, **dadurch gekennzeichnet, dass** das Gerät (1) eine Einrichtung zur Ermittlung aktueller Zeitdaten, wie insbesondere Uhrzeit und Datum, aufweist und dass einer erfassten Kennung die aktuellen Zeitdaten zugeordnet werden.

9. Verfahren nach einem der vorhergehenden Ansprüche, **dadurch gekennzeichnet, dass** das Gerät (1) eine Kartographie der Umgebung aufweist und dass einer erfassten Kennung die zum Zeitpunkt der Erfassung aus der Kartographie ermittelten Kartographiedaten zugeordnet werden.

10. Verfahren nach einem der Ansprüche 8 oder 9, **dadurch gekennzeichnet, dass** zusammen mit der Kennung die zugeordneten Zeitdaten und/oder die zugeordneten Kartographiedaten in einem bevorzugt nicht flüchtigen Speicher gespeichert werden.

11. System einschließlich eines oder mehrerer Sendegeräte (8) und eines selbsttätig verfahrbaren Geräts (1), insbesondere Reinigungsgeräts zur Reinigung eines Bodens (2) wie ein Saug- und/oder Kehrroboter, wobei das selbsttätig verfahrbare Gerät bevorzugt mit einer berührungsfreien und/oder berührend arbeitenden Sensorik (5) zur Erfassung von Gegenständen ausgestattet ist, wobei das selbsttätig verfahrbare Gerät weiter mit einer Empfangseinrichtung (7) für drahtlose Signale (S) wie Bluetooth, W-Lan, ZigBee oder andere kabellose Übertragungsverfahren, weiter wie UMTS, DECT, GSM oder andere Mobilfunkstandards, und einem nicht flüchtigen Speicher ausgestattet ist, wobei in dem Speicher ein oder mehrere bestimmte Sendegeräte (8) individualisierende Kennungen gespeichert sind, wobei von der Empfangseinrichtung (7) empfangene Signale mit den gespeicherten Kennungen vergleichbar sind, wobei in Abhängigkeit von einer Erkennung einer, ein bestimmtes Sendegerät (8) individualisierenden Kennung als gespeicherte oder nicht gespeicherte Kennung unterschiedliche Handlungen des Gerätes (1) auslösbar sind, **dadurch gekennzeichnet, dass** keine gezielte Befehlsauslösung über das Sendegerät (8) zur Auslösung einer Handlung des Gerätes (1) erforderlich ist.

12. Gerät nach Anspruch 11, **dadurch gekennzeichnet, dass** bei Erkennung einer nicht gespeicherten Kennung eine Alarmfunktion auslösbar ist.

13. Gerät nach einem der Ansprüche 11 oder 12, **dadurch gekennzeichnet, dass** bei Erkennung einer gespeicherten Kennung eine Verfahrroutine auslösbar ist und/oder bevorzugt, dass bei Erkennung einer gespeicherten Kennung ein Verfahren des Gerätes (1) zu einer Ruheposition auslösbar ist.

14. Gerät nach einem der Ansprüche 11 bis 13, **dadurch gekennzeichnet, dass** das Gerät (1) eine Einrichtung zur Ermittlung aktueller Zeitdaten, wie insbesondere Uhrzeit und Datum, aufweist.

15. Gerät nach einem der Ansprüche 11 bis 14, **dadurch gekennzeichnet, dass** das Gerät (1) einen bevorzugt nicht flüchtigen Speicher aufweist, zur Speicherung erfasster Kennungen zusammen mit zum Zeitpunkt der Erfassung ermittelter Zeitdaten und/oder Kartographiedaten einer in dem Gerät (1) hinterlegten Kartographie.

## Claims

1. Method for operating a self-propelling apparatus (1), in particular a cleaning apparatus for cleaning a floor (2) such as a vacuum and/or sweeping robot, preferably comprising a touch-free and/or touch-operated sensor system (5) for detecting objects, further comprising a receiving device (7) for wireless signals such as Bluetooth, WLAN, ZigBee or other wireless transmission methods, also such as UMTS, DECT, GSM or other mobile radio standards, and a non-volatile memory of the apparatus (1), the non-volatile memory being a memory of the apparatus (1) in which identifiers that individualise particular transmitting apparatuses (8) are stored, signals received by the receiving device (7) being compared with the stored identifiers, different actions of the apparatus (1) being triggered depending on an identifier that individualises a particular transmitting apparatus (8) being detected as a stored or non-stored identifier, **characterised in that** no specific command trigger via the transmitting apparatus (8) is required to trigger an action of the device (1).

2. Method according to claim 1, **characterised in that** an alarm function is triggered when an identifier that has not been stored is detected.

3. Method according to either of the preceding claims, **characterised in that** a movement routine is triggered when a stored identifier is detected.

4. Method according to claim 3, **characterised in that** a movement of the apparatus (1) to a rest position is triggered when a stored identifier is detected.

5. Method according to any of the preceding claims, **characterised in that** a found identifier is displayed.

6. Method according to claim 5, **characterised in that** the identifier is stored in the non-volatile memory by confirming a displayed identifier.

7. Method according to any of the preceding claims, **characterised in that** an action of the apparatus (1) is triggered depending on a particular strength of the signal (S).

8. Method according to any of the preceding claims, **characterised in that** the apparatus (1) comprises a device for determining current time data, such as in particular the hour and date, and **in that** the current time data are assigned to a detected identifier.

9. Method according to any of the preceding claims, **characterised in that** the apparatus (1) comprises cartography of the surroundings and **in that** the cartography data determined from the cartography at the time of detection are assigned to a detected identifier.

10. Method according to either claim 8 or claim 9, **characterised in that**, together with the identifier, the assigned time data and/or the assigned cartography data are stored in a preferably non-volatile memory.

11. System including one or more transmitting apparatuses (8) and a self-propelling apparatus (1), in particular a cleaning apparatus for cleaning a floor (2) such as a vacuum and/or sweeping robot, the self-propelling apparatus preferably being provided with a touch-free and/or touch-operated sensor system (5) for detecting objects, the self-propelling apparatus also being provided with a receiving device (7) for wireless signals (S) such as Bluetooth, WLAN, ZigBee or other wireless transmission methods, also such as UMTS, DECT, GSM or other mobile radio standards, and a non-volatile memory, one or more identifiers that individualise particular transmitting apparatuses (8) being stored in the memory, it being possible to compare signals received by the receiving device (7) with the stored identifiers, it being possible to trigger different actions of the apparatus (1) depending on an identifier that individualises a particular transmitting apparatus (8) being detected as a stored or non-stored identifier, **characterised in that** no specific command trigger via the transmitting apparatus (8) is required to trigger an action of the device (1).

12. Apparatus according to claim 11, **characterised in that** an alarm function can be triggered when an identifier that has not been stored is detected.

13. Apparatus according to either claim 11 or claim 12, **characterised in that** a movement routine can be triggered when a stored identifier is detected and/or preferably **in that** a movement of the apparatus (1) to a rest position can be triggered when a stored identifier is detected.

14. Apparatus according to any of claims 11 to 13, **characterised in that** the apparatus (1) comprises a device for determining current time data, such as in particular the hour and date.

15. Apparatus according to any of claims 11 to 14, **characterised in that** the apparatus (1) comprises a preferably non-volatile memory, for storing detected identifiers together with time data determined at the time of detection and/or cartography data of cartography stored in the apparatus (1).

## Revendications

1. Procédé pour faire fonctionner un appareil à déplacement automatique (1), en particulier un appareil de nettoyage pour nettoyer un sol (2) tel qu'un robot aspirateur et/ou balayeur, de préférence avec un système capteur (5) opérant sans contact et/ou avec contact pour détecter des objets, en outre avec un dispositif de réception (7) pour des signaux sans fil tels que Bluetooth, W-Lan, ZigBee ou d'autres procédés de transmission sans fil, tels que encore UMTS, DECT, GSM ou d'autres normes de radiocommunication mobile, et une mémoire non volatile de l'appareil (1), la mémoire non volatile étant une mémoire de l'appareil (1) dans laquelle sont mémorisées des identificateurs individualisant des dispositifs d'émission déterminés (8), dans lequel les signaux reçus par le dispositif de réception (7) sont comparés aux identificateurs mémorisés, différentes actions de l'appareil (1) étant déclenchées en fonction d'une identification d'un identificateur individualisant un dispositif d'émission déterminé (8) en tant qu'identificateur mémorisé ou non mémorisé, **caractérisé en ce qu'**aucun déclenchement d'ordre spécifique via le dispositif d'émission (8) n'est nécessaire pour déclencher une action de l'appareil (1).

2. Procédé selon la revendication 1, **caractérisé en ce qu'**une fonction d'alarme est déclenchée en cas d'identification d'un identifiant non mémorisé.

3. Procédé selon l'une des revendications précédentes, **caractérisé en ce qu'**une routine de déplacement est déclenchée en cas d'identification d'un identifiant mémorisé.

4. Procédé selon la revendication 3, **caractérisé en ce qu'**un déplacement du dispositif (1) vers une position de repos est déclenché en cas d'identification d'un identificateur mémorisé.

5. Procédé selon l'une des revendications précédentes, **caractérisé en ce qu'**un identifiant trouvé est affiché.

6. Procédé selon la revendication 5, **caractérisé en ce que**, en confirmant un identifiant affiché, une mémorisation de l'identifiant dans la mémoire non-volatile est effectuée.

7. Procédé selon l'une des revendications précédentes, **caractérisé en ce qu'**une action de l'appareil (1) est déclenchée en fonction d'une intensité déterminée du signal (S).

8. Procédé selon l'une des revendications précédentes, **caractérisé en ce que** l'appareil (1) comprend un dispositif pour déterminer des données temporelles courantes telles que, en particulier, l'heure et la date, et **en ce que** les données temporelles courantes sont attribuées à un identificateur détecté.

9. Procédé selon l'une des revendications précédentes, **caractérisé en ce que** l'appareil (1) comprend une cartographie de l'environnement et **en ce qu'**à un identificateur détecté sont attribuées les données cartographiques déterminées à partir de la cartographie au moment de la détection.

10. Procédé selon l'une des revendications 8 ou 9, **caractérisé en ce que**, conjointement avec l'identificateur, les données temporelles et/ou les données cartographiques attribuées sont mémorisées dans une mémoire de préférence non-volatile.

11. Système comprenant un ou plusieurs dispositifs d'émission (8) et un appareil à déplacement automatique (1), en particulier un appareil de nettoyage pour nettoyer un sol (2) tel qu'un robot aspirateur et/ou balayeur, dans lequel l'appareil à déplacement automatique est de préférence équipé d'un système capteur (5) opérant sans contact et/ou avec contact pour détecter des objets, dans lequel l'appareil à déplacement automatique est en outre équipé d'un dispositif de réception (7) de signaux sans fil (S) tels que Bluetooth, W-Lan, ZigBee ou d'autres procédés de transmission sans fil, tels que encore UMTS, DECT, GSM ou d'autres normes de radiocommunication mobile, et une mémoire non volatile, un ou plusieurs identificateurs individualisant des dispositifs d'émission déterminées (8) étant mémorisés dans la mémoire, dans lequel les signaux reçus par le dispositif de réception (7) peuvent être comparés aux identificateurs mémorisés, différentes actions de l'appareil (1) pouvant être déclenchées en fonction d'une identification d'un identificateur individualisant un dispositif d'émission déterminé (8) en tant qu'identificateur mémorisé ou non mémorisé, **caractérisé en ce qu'**aucun déclenchement d'ordre spécifique via le dispositif d'émission (8) n'est nécessaire pour déclencher une action de l'appareil (1).

12. Appareil selon la revendication 11, **caractérisé en ce qu'**une fonction d'alarme peut être déclenchée en cas d'identification d'un identifiant non mémorisé.

13. Appareil selon l'une des revendications 11 ou 12, **caractérisé en ce qu'**une routine de déplacement peut être déclenchée en cas d'identification d'un identificateur mémorisé, et/ou **en ce que**, de préférence, un déplacement de l'appareil (1) vers une position de repos peut être déclenché en cas d'identification d'un identificateur mémorisé.

14. Appareil selon l'une quelconque des revendications 11 à 13, **caractérisé en ce que** l'appareil (1) comprend un dispositif pour déterminer les données temporelles courantes telles que, en particulier, l'heure et la date.

15. Appareil selon l'une des revendications 11 à 14, **caractérisé en ce que** l'appareil (1) comporte une mémoire de préférence non volatile pour mémoriser des identificateurs détectés, conjointement avec des données temporelles et/ou des données cartographiques d'une cartographie stockée dans l'appareil (1) qui sont déterminées au moment de la détection.
